## Europäisches Patentamt

## European Patent Office

## Office européen des brevets

(19)

(11) Veröffentlichungsnummer: **0 087 173**
**B1**

(12)

# EUROPÄISCHE PATENTSCHRIFT

(45) Veröffentlichungstag der Patentschrift:
23.04.86

(51) Int. Cl.⁴: **H 02 P 1/46**

(21) Anmeldenummer: **83200071.5**

(22) Anmeldetag: **19.01.83**

(54) **Selbstanlaufender Einphasensynchronmotor.**

(30) Priorität: **29.01.82 DE 3202965**

(43) Veröffentlichungstag der Anmeldung:
**31.08.83 Patentblatt 83/35**

(45) Bekanntmachung des Hinweises auf die Patenterteilung:
**23.04.86 Patentblatt 86/17**

(84) Benannte Vertragsstaaten:
**AT DE FR GB**

(56) Entgegenhaltungen:
**DE - B - 2 524 519**
**DE - B - 2 612 851**
**DE - C - 1 002 871**
**US - A - 3 600 656**

(73) Patentinhaber: **Philips Patentverwaltung GmbH,
Billstrasse 80, D-2000 Hamburg 28 (DE)**

(84) Benannte Vertragsstaaten: **DE**

(73) Patentinhaber: **N.V. Philips' Gloeilampenfabrieken,
Groenewoudseweg 1, NL-5621 BA Eindhoven (NL)**

(84) Benannte Vertragsstaaten: **FR GB AT**

(72) Erfinder: **Schemmann, Hugo, Dr., Zwartebergweg 6,
Schaesberg (NL)**
Erfinder: **Bertram, Leo, Am Sender 10, D-5190 Stolberg
(DE)**

(74) Vertreter: **Kupfermann, Fritz-Joachim et al, Philips
Patentverwaltung GmbH
Billstrasse 80 Postfach 10 51 49,
D-2000 Hamburg 28 (DE)**

ACTORUM AG

## Beschreibung

Die Erfindung bezieht sich auf einen selbstanlaufenden Einphasensynchronmotor ohne Hilfswicklung mit einem dauermagnetischen, diametral magnetisierten Läufer und mit einem zweipoligen Ständer, der mit Erregerwicklungen versehen ist und einen in Reihe in den Stromkreis der Erregerwicklung geschalteten temperaturabhängigen Widerstand aufweist.

Aus der DE-B 2524519 ist es bekannt, dass Einphasensynchronmotoren ohne Hilfswicklung nur anlaufen, wenn die Beschleunigung ausreicht, den Rotor innerhalb eines Bruchteiles der Periodendauer der treibenden Spannung auf die synchrone Winkelgeschwindigkeit zu bringen. Entscheidend für die im Leerlauf zur Verfügung stehende Beschleunigung sind das Strommoment und das Massenträgheitsmoment. Bei höheren Betriebsfrequenzen wird die zur Beschleunigung zur Verfügung stehende Zeit kleiner, was bedingt, dass die Beschleunigungskraft grösser werden muss. Infolge der Vergrösserung des induktiven Widerstandes mit der Frequenz wird aber durch den abnehmenden Strom die kritische Beschleunigung kleiner. Dies lässt sich in gewissen Grenzen durch eine Verkleinerung der Impedanz Z durch Änderung der Spulenwicklung auffangen. Man stösst jedoch schnell auf die thermischen Grenzen des Motors, so dass insgesamt bei einer Erhöhung der Betriebsfrequenz das zulässige Massenträgheitsmoment im allgemeinen herabgesetzt werden muss. Dies führt dazu, das bei einer bestimmten Motorbaugrösse das zum Antrieb des Gerätes erforderliche Beschleunigungsmoment nicht mehr zur Verfügung steht.

Es ist aber auch möglich, dass ein Motor bei einer bestimmten Anwendung bei thermisch voller Auslastung bis an den zusätzlichen Erwärmungswert heran nicht in der Lage ist, beim Anlauf das erforderliche Massenträgheitsmoment zum Anlauf zu bringen.

Des weiteren ist es möglich, dass bei einem Anlauf unter Last durch bremsende Reibungsmomente oder andere Gegenmomente, z.B. elastische Gegenmomente, das verbleibende Beschleunigungsmoment für den Anlauf zu klein wird.

Aus der DE-B 2612851 ist weiterhin ein Motor bekannt, bei dem in Reihe mit dem Stromkreis der Erregerwicklungen ein temperaturabhängiger (NTC)-Widerstand geschaltet und so bemessen ist, dass sein ohmscher Widerstand nach erfolgtem Hochlaufen des Motors den zulässigen Dauerbelastungswiderstandswert annimmt. Mit dieser Massnahme soll eine Anlaufhilfe bewirkt werden, indem die beim Anlauf mit einer Netzfrequenz von 50 Hz auftretende störende 33⅓-Hz-Frequenz ausserhalb des Betriebsspannungsbereiches von 220V gelegt wird. Es wird dabei vorausgesetzt, dass die Impedanz des Motors ausreichend klein ist, um die erforderliche hohe Beschleunigung des Rotors sicherzustellen.

Abweichend davon ist es Aufgabe der Erfindung, das zum Anlauf erforderliche Beschleunigungsmoment bereitzustellen, welches den Rotor innerhalb eines Bruchteiles der Periodendauer der treibenden Spannung auf die synchrone Winkelgeschwindigkeit zu bringen vermag, ohne dass dabei eine Überhitzung auftritt.

Die gestellte Aufgabe ist erfindungsgemäss dadurch gelöst, dass der temperaturabhängige Widerstand einen positiven Temperaturkoeffizienten (PTC) aufweist und so bemessen ist, dass sein ohmscher Widerstand nach 0,5 bis 1 sec bis auf einen zulässigen Dauerbelastungswiderstandswert angestiegen ist.

Durch das Einschalten eines Widerstandes mit positivem Temperaturkoeffizienten wird der Betriebsstrom in der Anlaufphase kurzfristig auf einen solchen Wert erhöht, dass der Motor das zum Anlauf erforderliche ausreichende Beschleunigungsmoment erhält. Nach der Anlaufphase wird der Strom derart begrenzt, das er den Wert für maximal thermisch zulässige Erwärmung beim Betrieb nicht mehr überschreitet.

Nach einer weiteren Ausgestaltung der Erfindung ist vorgesehen, dass ein Belastungsvorwiderstand parallel zu dem Widerstand mit positivem Temperaturkoeffizienten geschaltet ist, dessen Dauerbelastungswiderstand auf einen Wert ansteigt, bei dem der Leitungszug, in dem der temperaturabhängige Widerstand angeordnet ist, gesperrt ist. Damit wird der Betriebsstrom in der Anlaufphase so weit erhöht, dass der Motor das zum Beschleunigen erforderliche Moment erfährt. Am Ende der Anlaufphase wird der Strom dann so weit begrenzt, dass der Wert für maximal thermisch zulässige Erwärmung beim Betrieb nicht mehr überschritten wird.

Nach einer weiteren Ausgestaltung der Erfindung ist vorgesehen, dass ein parallel zu einem in Reihe mit der Erregerwicklung angeordneten Belastungswiderstand geschaltetes Zeitschaltglied so ausgelegt ist, dass es den Überbrückungsleitungszug, in dem es angeordnet ist, 0,5 bis 1 sec nach dem Einschalten öffnet. Das Zeitschaltglied kann dabei ein elektronischer oder mechanischer Schalter sein, der sich zeitverzögert gegen Ende der Anlaufphase öffnet. In diesem Fall übernimmt das Zeitschaltglied während der Anlaufsekunde den Anlaufstrom. Nach Ablauf der Anlaufsekunde öffnet das Zeitschaltglied den Überbrückungsleitungszug, und die Erregerwicklung liegt nun in Reihe mit dem für maximale Temperaturauslastung dimensionierten Vorwiderstand.

Es ist an sich bekannt, in Verbindung mit Motorantrieben über Widerstände mit temperaturabhängigen Widerstandskoeffizienten Anlaufhilfsphasen zu- bzw. abzuschalten. In der DE-B 1002871 wird mit Hilfe eines solchen Widerstandes eine Hilfsphase beim Anlauf ein- und nach dem Anlauf wieder abgeschaltet. Aus der DE-B 1915135 ist es in diesem Zusammenhang weiterhin bekannt, über einen Widerstand mit temperaturabhängigem Widerstandskoeffizienten eine Anlaufhilfsphase nach dem Anlauf kurzzuschliessen. Ein direktes Einwirken auf die Betriebswicklung ist in den bekannten Fällen nicht vorgesehen.

Die Erfindung wird anhand der in den Zeichnungen dargestellten Ausführungsbeispiele näher erläutert. Es zeigen:

Fig. 1 einen selbstanlaufenden Einphasensynchronmotor mit einem vorgeschalteten PTC-Widerstand,

Fig. 2 einen Synchronmotor mit einer vorgeschalteten Parallelschaltung aus einem ohmschen Belastungswiderstand und einem PTC-Widerstand und

Fig. 3 einen selbstanlaufenden Synchronmotor mit einem Vorwiderstand und einem parallel zu diesem Vorwiderstand geschalteten Zeitschaltglied in Form eines elektronischen oder mechanischen, zeitverzögert öffnenden Schalters.

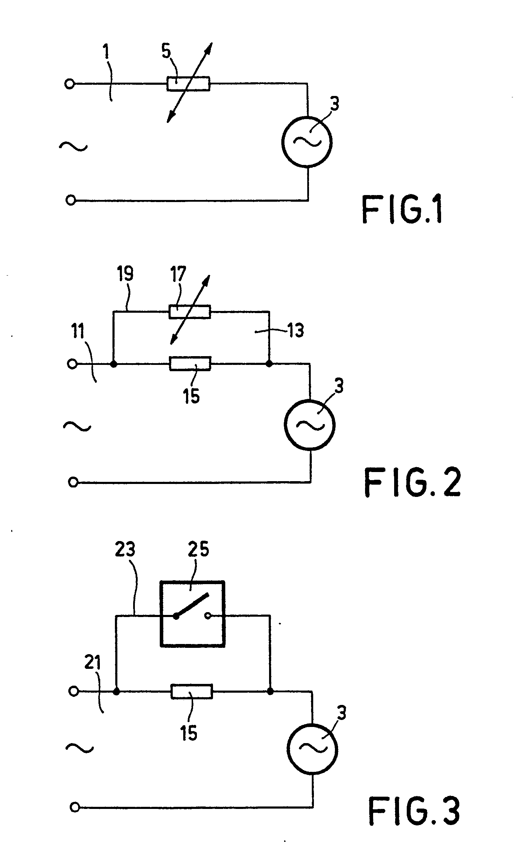

Fig. 1 zeigt ein Schaltbild, bei dem im Stromkreis 1 ein Einphasensynchronmotor angeordnet ist. In dem Stromkreis liegt ein Widerstand 5, d.h. ein ohmscher Widerstand mit positivem Temperaturkoeffizienten. Dieser PTC-Widerstand 5 ist derart bemessen, dass er in der Anlaufphase einen Strom durch den Synchronmotor 3 schickt, der grösser ist als der beim Betrieb und maximaler thermischer Belastung zulässige Strom. Innerhalb von ca. 0,5 bis 1 sec. erhöht sich der Widerstandswert des PTC-Widerstandes 5 auf einen ohmschen Widerstandswert, der so bemessen ist, dass der Stromdurchfluss durch die Wicklungen des Synchronmotors 3 auf die thermisch zulässige Belastung des Motors begrenzt ist. Dieser Wert entspricht dem zulässigen Dauerbelastungswiderstandswert.

Fig. 2 zeigt eine Schaltungsanordnung, bei der im Stromkreis 11 der Synchronmotor 3 und eine Parallelschaltung 13 aus einem ohmschen Vorwiderstand 15 und einem PTC-Widerstand 17 angeordnet ist. Der Vorwiderstand 15 ist so bemessen, dass die Wicklungen des Synchronmotors 3 während des Betriebes von einem Strom durchflossen sind, der maximal dem Strom für maximale thermische Auslastung entspricht. Der PTC-Widerstand 17 ist so bemessen, dass, ausgehend von einem sehr niedrigen Wert, sein ohmscher Widerstandswert nach ca. 0,5 bis 1 sec. auf einen Wert ansteigt, bei dem der Leitungszug 19, in dem dieser PTC-Widerstand 17 angeordnet ist, gesperrt wird. Nach der Anlaufzeit ist damit nur noch der Vorwiderstand 15 wirksam.

Bei der Ausführungsform nach Fig. 3 sind im Stromkreis 21 wieder der Synchronmotor 3 und der Vorwiderstand 14 angeordnet. Der Vorwiderstand 15 wird überbrückt von einem Überbrückungsleitungszug 23, in den ein Zeitschaltglied in Form eines elektronischen oder mechanischen, zeitverzögert öffnenden Schalters geschaltet ist. Das Zeitschaltglied 25 ist so ausgelegt, dass es den Leitungszug 23, in dem es angeordnet ist, ca. 0,5 bis 1 sec. nach dem Einschalten öffnet. Damit ist nach der Anlaufzeit allein der Vorwiderstand 15 wirksam.

Alle Widerstände, die PTC- und Vorwiderstände, sind vorzugsweise räumlich getrennt von der Motorwicklung angeordnet und auch, wenn möglich, getrennt belüftet.

## Patentansprüche

1. Selbstanlaufender Einphasensynchronmotor ohne Hilfswicklung mit einem dauermagnetischen, diametral magnetisierten Läufer und mit einem zweipoligen Ständer, der mit Erregerwicklungen versehen ist und einen in Reihe in den Stromkreis der Erregerwicklung geschalteten temperaturabhängigen Widerstand aufweist, dadurch gekennzeichnet, dass der temperaturabhängige Widerstand (5) einen positiven Temperaturkoeffizienten (PTC) aufweist und so bemessen ist, dass sein ohmscher Widerstand nach 0,5 bis 1 sec. bis auf einen zulässigen Dauerbelastungswiderstandswert angestiegen ist.

2. Selbstanlaufender Einphasensynchronmotor nach Anspruch 1, dadurch gekennzeichnet, dass ein Belastungsvorwiderstand (15) parallel zu dem Widerstand (17) mit positivem Temperaturkoeffizienten geschaltet ist, dessen Dauerbelastungswiderstand auf einen Wert ansteigt, bei dem der Leitungszug (19), in dem der temperaturabhängige Widerstand (17) angeordnet ist, gesperrt ist.

3. Selbstanlaufender Einphasensynchronmotor ohne Hilfswicklung mit einem dauermagnetischen, diametral magnetisierten Läufer und mit einem zweipoligen Ständer, der mit Erregerwicklungen versehen ist, die mit einem in Reihe geschalteten Belastungswiderstand ausgerüstet sind, zu dem ein Zeitschaltglied parallelgeschaltet ist, dadurch gekennzeichnet, dass das Zeitschaltglied (25) so ausgelegt ist, dass es den Überbrückungsleitungszug (23), in dem es angeordnet ist, 0,5 bis 1 sec. nach dem Einschalten öffnet.

4. Selbstanlaufender Einphasensynchronmotor nach einem der Ansprüche 1 bis 3, dadurch gekennzeichnet, dass die Widerstände räumlich getrennt von den Motorerregerwicklungen angeordnet sind.

## Claims

1. A self-starting single-phase synchronous motor without auxiliary coil, which motor comprises a diametrally magnetized permanent-magnet rotor and a two-pole stator, provided with exciter coils and a temperature-dependent resistor arranged in series in the circuit of the exciter coils, characterized in that the temperature-dependent resistor (5) is a positive temperature coefficient (PTC) resistor which is dimensioned so that its resistance has increased to a continuously permissible load resistance value after approximately 0.5 to 1 sec.

2. A self-starting single-phase synchronous motor, characterized in that in parallel with a load resistor (15) a positive temperature coefficient resistor (17) is arranged whose continuous load resistance increases to a value for which the branch (19) in which said temperature-dependent resistor (17) is arranged is cut off.

3. A self-starting single-phase synchronous motor without auxiliary coil, which motor comprises a diametrally magnetized permanent-magnet rotor and a two-pole stator provided with exciter coils which are provided with a series-connected load resistor in parallel with which a timing element is arranged, characterized in that the timing element (25) is dimensioned so that it opens the bypass branch (23) in which it is arranged approximately 0.5 to 1 sec. after switching on.

4. A self-starting single-phase synchronous motor as claimed in any one of the Claims 1 to 3, characterized in that the resistors are spatially isolated from the exciter coils of the motor.

**Revendications**

1. Moteur synchrone monophasé autodémarreur sans enroulement auxiliaire, ce moteur comprenant un rotor magnétiquement permanent aimanté diamétralement et un stator bipolaire qui est muni d'enroulements d'excitation et comporte une résistance dont la valeur ohmique est fonction de la température, cette résistance étant branchée dans le circuit de courant des enroulements d'excitation statoriques, caractérisé en ce que la résistance 5 à valeur ohmique qui est fonction de la température à un coefficient de température positif (résistance CTP) et est dimensionnée de façon que sa valeur ohmique atteint une valeur ohmique admissible pour charge permanente après une durée comprise entre 0,5 seconde et 1 seconde.

2. Moteur synchrone monophasé autodémarreur selon la revendication 1, caractérisé en ce qu'une résistance série de charge (15) shunte la résistance à coefficient de température positif (17) dont la valeur ohmique de charge permanente passe à une valeur ohmique plus élevée à laquelle la ligne (19) contenant la résistance (17) à valeur ohmique qui est fonction de la température, est bloquée.

3. Moteur synchrone monophasé autodémarreur sans enroulement auxiliaire, ce moteur comprenant un rotor magnétiquement permanent aimanté diamétralement et un stator bipolaire qui est muni d'enroulements d'excitation équipés d'une résistance série de charge shuntée par un élément de chronométrage, caractérisé en ce que ledit élément de temporisation (25) est proportionné de façon qu'il ouvre la ligne de shunt (23) qui le contient, après une durée comprise entre 0,5 seconde et 1 seconde consécutivement à l'enclenchement.

4. Moteur synchrone monophasé autodémarreur selon une des revendications 1 à 3, caractérisé en ce que les résistances sont séparées spatialement des enroulements d'excitation de moteur.

FIG.1

FIG.2

FIG.3